# EUROPÄISCHE PATENTSCHRIFT

(11) **EP 1 934 008 B1**
(45) Veröffentlichungstag und Bekanntmachung des Hinweises auf die Patenterteilung: **25.02.2009**
(21) Anmeldenummer: 06828490.0
(22) Anmeldetag: 13.10.2006
(51) Int. Cl.: B23B 31/00

(54) **WERKZEUGSPANNFUTTER, DAS FÜR EIN AUTOMATISCHES SPANNEN MITTELS EINER AUTOMATIKSPINDEL AN EINER MASCHINE AUSGELEGT IST**
TOOL CLAMPING CHUCK DESIGNED FOR AUTOMATIC CLAMPING BY MEANS OF AN AUTOMATIC SPINDLE ON A MACHINE
MANDRIN DE SERRAGE CONÇU POUR UN SERRAGE AUTOMATIQUE SUR UNE MACHINE AU MOYEN D'UNE BROCHE AUTOMATIQUE

(30) Priorität: 14.10.2005 DE 202005016270 U
(43) Veröffentlichungstag der Anmeldung: 25.06.2008
(73) Patentinhaber: Firma Gühring oHG, 72458 Albstadt (DE)
(72) Erfinder: MATHEIS, Klaus, 88605 Sauldorf/Rast (DE)
(74) Vertreter: Eisele, Otten, Roth & Dobler
(86) Internationale Anmeldenummer: PCT/DE2006/001828
(87) Internationale Veröffentlichungsnummer: WO 2007/042020

(56) Entgegenhaltungen:
- DE-A1- 10 312 743
- DE-A1-3102005 013 48

## Beschreibung

Die Erfindung betrifft ein Werkzeugspannfutter nach dem Oberbegriff des Anspruchs 1.

### Stand der Technik

Aus der deutschen Offenlegungsschrift DE-A1-103 12 743 ist ein solcher Spannfutter für ein Werkzeug bekannt, das eine Vorrichtung zur Zuführung eines Kühl- und/oder Schmiermediums an einen Mediumkanal eines im Spannfutter gehaltenen Werkzeugs umfasst, wobei in dem Spannfutter eine Hülse angeordnet ist, welche als Kupplung für eine Zufuhrleitung für die Versorgung mit Medium dient. In der Hülse steckt ein Rohrelement, dem eine Stellschraube nachgeordnet ist, wobei die Stellschraube gegenüber dem Spannfutter in Richtung einer Längsachse des Spannfutters verstellbar ist. Das Rohrelement lässt sich in der Hülse in Richtung der Längsachse des Spannfutters verschieben und ist auf der dem Werkzeug entgegengesetzten Seite über ein Stellwerkzeug betätigbar, wobei das Rohrelement mit der Stellschraube drehfest verbunden ist.

Hierdurch ist es möglich die Stellschraube zusammen mit dem Rohrelement zur Einstellung eines Anschlags für ein Werkzeug, das heißt zur Einstellung einer gewünschten Spanntiefe, zu verstellen.

### Aufgabe und Vorteile der Erfindung

Der Erfindung liegt die Aufgabe zugrunde ein alternatives Werkzeugspannfutter bereit zu stellen, mit welchem sich auf vergleichbar einfache Art und Weise eine Spanntiefeneinstellung unter Gewährleistung einer Kühl-/Schmiermediumzufuhr für ein Werkzeug vornehmen lässt.

Diese Aufgabe wird durch die Merkmale des Anspruchs 1 gelöst.

In den abhängigen Ansprüchen sind vorteilhafte und zweckmäßige Weiterbildungen der Erfindung angegeben.

Die Erfindung geht von einem Werkzeugspannfutter aus, das für ein automatisches Spannen mittels einer Automatikspindel an einer Maschine ausgelegt ist, und eine Vorrichtung zur Zuführung eines Kühl-/Schmiermediums an einen Mediumkanal des im Spannfutter gehaltenen Werkzeugs umfasst. Im Spannfutter ist eine Kupplungshülse angeordnet, welche als Kupplung für eine Zufuhrleitung an einer Spanneinrichtung für eine Versorgung für Kühl-/Schmiermedium dient, wobei die Kupplungshülse elastisch, insbesondere in einer im Spannfutter eingeschraubten Gewindehülse aufgenommen ist, wobei der Kupplungshülse in Richtung Werkzeug eine Stellschraube nachgeordnet ist, welche gegenüber dem Spannfutter in Richtung der Längsachse des Spannfutters verstellbar ist und wobei in der Kupplungshülse ein Rohrelement geführt ist, das in der Kupplungshülse in Richtung der Längsachse des Spannfutters verschiebbar ist und in Richtung Stellschraube zeigt. Der Kern der Erfindung liegt darin, dass Federmittel vorgesehen sind, die einen Federweg des Rohrelements in Richtung der Längsachse des Spannfutters bereitstellen, so dass das Rohrelement federnd an die Stellschraube angedrückt ist. Durch diese Vorgehensweise kann sichergestellt werden, dass unabhängig von einer Schraubposition der Stellschraube im Spannfutter das Rohrelement immer zumindest annähernd dicht an der Stellschraube anliegt, um über deren Durchgangsöffnung ein von der anderen Seite anliegendes Werkzeug mit Kühl-/Schmiermedium versorgen zu können. Denn eine Positionsänderung wird automatisch durch ein Aus- oder Einfedern des Rohrelements in der Kupplungshülse ausgeglichen. Damit kann ohne Beeinträchtigung einer Kühlmittelzufuhr die Spanntiefe durch Verstellen der Stellschraube von der Werkzeugseite oder von der Maschinenseite aus eingestellt werden.

In einer besonders bevorzugten Ausgestaltung der Erfindung umfassen die Federmittel eine Spiralfeder, die vorzugsweise auf der Außenseite des Rohrelements angeordnet ist. Die Kraftübertragung der Spiralfeder lässt sich dadurch einfach bewerkstelligen, dass sich diese einerseits an der Kupplungshülse und andererseits an einem entsprechenden Anschlag, zum Beispiel einem Anschlagkragen, welcher am Rohrelement ausgebildet ist, abstützt.

In einer überdies bevorzugten Ausgestaltung der Erfindung ist das Rohrelement passgenau in der Kupplungshülse geführt. Damit kann auf weitere Dichtüngselemente zwischen dem Rohrelement und der Kupplungshülse verzichtet werden, ohne dass ein Versacken von Kühl-/Schmiermittel am Übergang von Rohrelement zu Kupplungshülse zu befürchten wäre. Auf diese Weise kann die Bauteilgruppe Kupplungshülse/Rohrelement mit Federmittel vergleichsweise einfach und zuverlässig aufgebaut werden.

Bei dem Werkzeugspannfutter handelt es sich vorzugsweise um ein HSK-Schrumpffutter. Derartige automatisch spannbare Futter sind bereits vielfach im Einsatz.

### Zeichnungen

Ein Ausführungsbeispiel der Erfindung ist in den Zeichnungen dargestellt und wird nachfolgend unter Angabe weiterer Vorteile und Einzelheiten näher erläutert. Es zeigen
- Figur 1: in einer Seitenansicht ein Werkzeugspannfutter mit ausschnittsweise dargestelltem Werkzeug und
- Figuren 2a und 2b: eine Baugruppe des Kühl-/Schmiermittelkanals des Werkzeugspannfutters gemäß Figur 1 in isolierter Darstellung in einer geschnittenen Seitenansicht (Figur 2a) sowie einer Draufsicht von der Werkzeugseite (Figur 2b).

### Beschreibung des Ausführungsbeispiels

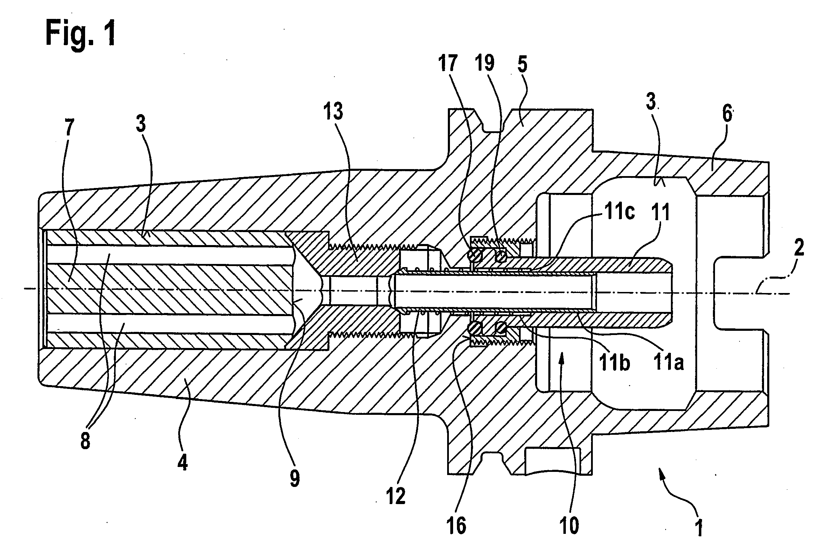

Das Spannfutter 1 weist eine Längsachse 2 auf, entlang welcher eine Durchgangsöffnung 3 abschnittsweise unterschiedliche Durchmesser besitzt. Das Spannfutter umfasst einen Spannabschnitt 4, einen Mittelabschnitt 5 sowie einen Kupplungsabschnitt 6 auf. Der Spannabschnitt 4 ist dazu vorgesehen ein Werkzeug 7 (in Figur 1 teilweise dargestellt) aufzunehmen, welches Mediumkanäle 8 zum Transport von Kühl-/Schmiermedium an eine nicht dargestellte Werkzeugspitze umfasst, die in einer Bodenfläche 9 des Werkzeugs 7 münden.

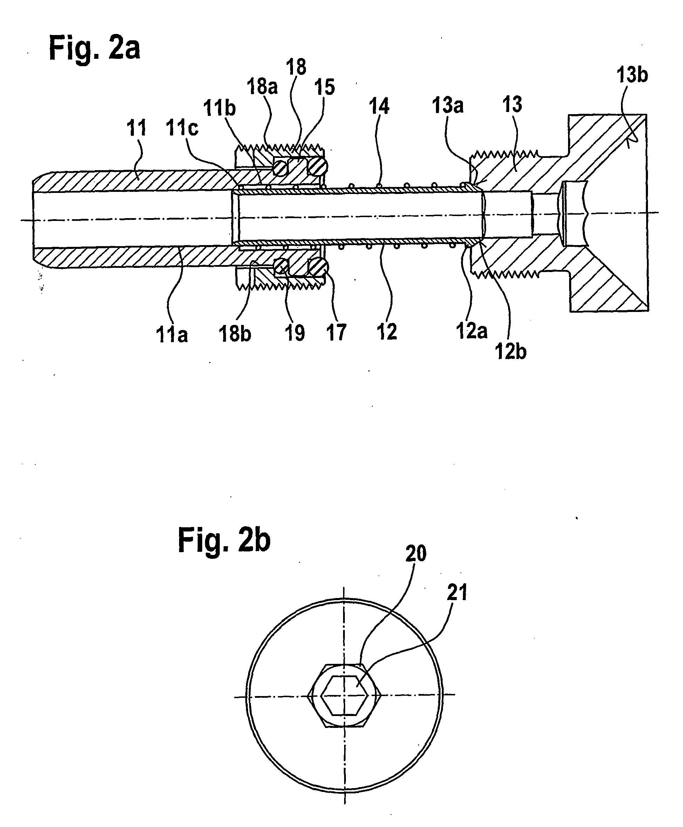

Im Mittelabschnitt 5 und teilweise im Kupplungsabschnitt 6 ist eine Vorrichtung 10 zur Zuführung von Kühl-/Schmiermedium an die Mediumkanäle 8 des Werkzeugs 7 vorgesehen. Über den Kupplungsabschnitt 6 erfolgt die Ankupplung des Spannfutters 1 an eine Spindel einer Werkzeugmaschine (beides nicht dargestellt), wobei an der Spindel über eine Leitung (nicht dargestellt) das Kühl-/Schmiermedium an die Vorrichtung 10 übergeben wird. Das Spannfutter 1 ist zum Beispiel ein Schrumpffutter, bei welchem das Werkzeug durch thermisches Aufweiten des Spannabschnitts 4 und anschließendes Schrumpfen mit eingesetztem Werkzeug gespannt wird. Die Vorrichtung 10 umfasst im wesentlichen eine Kupplungshülse 11, ein Rohrelement 12 und eine Stellschraube 13. Das Rohrelement 12 ist in der Kupplungshülse 11 in einem Abschnitt 11a geführt, insbesondere passgenau. In einem Abschnitt 11b weist die Kupplungshülse 11 einen vergrößerten Durchmesser auf, mit einem Absatz 11c (siehe auch Figur 2a, wobei hier das Rohrelement 12 in Bezug zur Kupplungshülse 11 in einer weiter ausgefahrenen Verschiebeposition dargestellt ist).

Im Weiteren besitzt das Rohrelement 12 einen Anschlagkragen 12a in einem zum Werkzeug zeigenden vorderen Endbereich. Vom Anschlagkragen 12a, entlang der Außenseite des Rohrelements 12 sowie innerhalb der Kupplungshülse 11 im Abschnitt 11b mit erweitertem Durchmesser bis zum Absatz 11c erstreckt sich eine Spiralfeder 14. Die Spiralfeder 14 stützt sich somit zwischen dem Anschlagkragen 12a des Rohrelements 12 und dem Absatz 11c der Kupplungshülse 11 ab. Sofern die Spiralfeder unter Spannung steht findet eine Kraftwirkung auf das Rohrelement 12 durch die Spiralfeder 14 statt, unter welcher das Rohrelement aus der Kupplungshülse 11 in Richtung der Stellschraube 13 gegen die Stellschraube 13 gedrückt wird. Die Stellschraube 13 sowie ein vorderer Bereich des Rohrelements 12 besitzen vorzugsweise aufeinander abgestimmte Konusflächen 12b bzw. 13a, sodass unter Andrücken des Rohrelements 12 an die Stellschraube 13 eine ausreichend dichte Schnittstelle erzeugt ist.

In einem zum Werkzeug 7 hin orientierten Endbereich ist die Kupplungshülse 11 mit einem ringförmigen Absatz bzw. Kragen 15 versehen und weist zu einer Anschlagsfläche 16 der Durchgangsöffnung 3 eine O-Ringdichtung 17 auf. Mittels einer Gewindehülse 18 mit einem Außengewinde 18a sowie einer weiteren O-Ringdichtung 19 auf der der O-Ringdichtung 17 gegenüberliegenden Seite des Absatzes 15 ist die Kupplungshülse 11 mit dem Spannfutter 1 verschraubt, wobei die Kupplungshülse 11 von der Gewindehülse 18 gegen die Anschlagfläche 16 des Spannfutters 1 gedrückt wird. Die über die Kupplungshülse 11 gesteckte Gewindehülse 18 weist eine Öffnung 18b derart auf, dass durch die O-Ringdichtungen 17, 19 und einen nicht flächig an einer Innenseite der Gewindehülse 18 anliegenden Absatz 15 eine gewisse Beweglichkeit der Kupplungshülse 11 bei fest eingeschraubter Gewindehülse 18 gegeben ist. Dadurch lassen Fluchtungsfehler zwischen einem Kühlmittelübergabestück einer Automatikspindel zur Kupplungshülse 11 in einem ausreichenden Maße ausgleichen.

Zur Einstellung einer Spanntiefe kann die Stellschraube 13 mittels eines Werkzeugs verdreht werden, das in einen von der Werkzeugseite zugänglichen Innensechskant 20 oder einen von der gleichen oder gegenüberliegenden Seite zugänglichen kleineren Innensechskant 21 eingreift. Damit kann die Stellschraube 13 verdreht und in Bezug zur Längsachse 2 des Spannfutters 1 verstellt werden.

Dabei ist durch das angedrückte Rohrelement 12 mittels der Feder 14 immer gewährleistet, das Kühl-/Schmiermedium ohne gravierende Dichtlücke bis zum Werkzeug 7 geführt werden kann. Das Werkzeug 7 liegt an der Stellschraube 13 an einem Innenkonus 13b an, über welchen sichergestellt ist, dass ein freier Zugang zu den Mediumkanälen 8 des Werkzeugs 7 besteht.

## Patentansprüche

1. Werkzeugspannfutter (1), das für ein automatisches Spannen mittels einer Automatikspindel an einer Maschine ausgelegt ist, mit einer Vorrichtung (10) zur Zuführung eines Kühl-/Schmiermediums an einen Mediumkanal (8) eines im Spannfutter (1) gehaltenen Werkzeugs (7), wobei im Spannfutter (1) eine Kupplungshülse (11) angeordnet ist, welche als Kupplung für eine Zufuhrleitung einer Spannvorrichtung für eine Versorgung für Kühl-/Schmiermedium dient, wobei die Kupplungshülse (11) elastisch im Spannfutter (1) aufgenommen ist, wobei der Kupplungshülse (11) in Richtung Werkzeug (7) eine Stellschraube (13) mit Durchgangsöffnung nachgeordnet ist, welche gegenüber dem Spannfutter (1) in Richtung einer Längsachse (2) des Spannfutters (1) verstellbar ist und wobei in der Kupplungshülse (11) ein Rohrelement (12) geführt ist, das in der Kupplungshülse (11) in Richtung der Längsachse (2) des Spannfutters (1) verschiebbar ist und in Richtung Stellschraube (13) zeigt, **dadurch gekennzeichnet, dass** Federmittel (14) vorgesehen sind, die einen Federweg des Rohrelements (12) in Richtung der Längsachse (2) des Spannfutters (1) bereitstellen, so dass das Rohrelement (12) federnd an die Stellschraube (13) angedrückt ist.

2. Werkzeugspannfutter nach Anspruch 1, **dadurch gekennzeichnet, dass** die Federmittel eine Spiralfeder (14) umfassen.

3. Werkzeugspannfutter nach Anspruch 1 oder 2, **dadurch gekennzeichnet, dass** die Federmittel auf der Außenseite des Rohrelements (12) angeordnet sind.

4. Werkzeugspannfutter nach einem der vorhergehenden Ansprüche, **dadurch gekennzeichnet, dass** die Federmittel sich am Rohrelement (12) und an der Kupplungshülse (11) abstützen.

5. Werkzeugspannfutter nach einem der vorhergehenden Ansprüche, **dadurch gekennzeichnet, dass** das Rohrelement (12) in der Kupplungshülse (11) passgenau geführt ist, so dass ohne weitere Dichtungselemente ein Versacken von Kühl-/Schmiermittel am Übergang von Rohrelement (12) zu Kupplungshülse (11) im Wesentlichen vermieden werden kann.

6. Werkzeugspannfutter nach einem der vorhergehenden Ansprüche, **dadurch gekennzeichnet, dass** das Werkzeugspannfutter ein HSK-Schrumpffutter (1) ist.

## Claims

1. Tool clamping chuck (1) designed for automatic clamping by means of an automatic spindle on a machine, with a device (10) for supplying a coolant or lubricant to a medium channel (8) of a tool (7) held in the clamping chuck (1), whereby a coupling sleeve (11) is arranged in the clamping chuck (1), which sleeve serves as a coupling for a supply line of a clamping device for supplying coolant or lubricant, whereby the coupling sleeve (11) is mounted elastically in the clamping chuck (1), whereby an adjusting screw (13) with a through-opening is arranged after the coupling sleeve (11) in the direction of the tool (7), which adjusting screw can be adjusted relative to the clamping chuck (1) in the direction of a longitudinal axis (2) of the clamping chuck (1), and whereby a tubular element (12) is guided in the coupling sleeve (11), which tubular element can be displaced in the coupling sleeve (11) in the direction of the longitudinal axis (2) of the clamping chuck (1) and points in the direction of the adjusting screw (13), **characterized in that** a spring system (14) is provided which provides a spring movement of the tubular element (12) in the direction of the longitudinal axis (2) of the clamping chuck (1), so that the tubular element (12) is pressed against the adjusting screw (13) by the force of a spring.

2. Tool clamping chuck according to claim 1, **characterized in that** the spring system comprises a spiral spring (14).

3. Tool clamping chuck according to claim 1 or 2, **characterized in that** the spring system is arranged on the outside of the tubular element (12).

4. Tool clamping chuck according to one of the preceding claims, **characterized in that** the spring system is supported on the tubular element (12) and on the coupling sleeve (11).

5. Tool clamping chuck according to one of the preceding claims, **characterized in that** the tubular element (12) is guided to fit exactly into the coupling sleeve (11), so that without additional sealing elements it is possible to avoid substantially the sinking of coolants and lubricants at the transition of the tubular element (12) and the coupling sleeve (11).

6. Tool clamping chuck according to one of the preceding claims, **characterized in that** the tool clamping chuck is an HSK shrink chuck (1).

## Revendications

1. Mandrin de serrage d'outil (1), lequel est conçu pour un serrage automatique au moyen d'une broche automatique sur une machine, comportant un dispositif (10) destiné à amener un liquide de refroidissement ou de lubrification à un canal de liquide (8) d'un outil (7) tenu dans le mandrin de serrage (1), un manchon d'accouplement (11) étant agencé à l'intérieur du mandrin de serrage (1), lequel manchon d'accouplement fait office de couplage d'une conduite d'amenée d'un dispositif de serrage pour une alimentation en liquide de refroidissement ou de lubrification, le manchon d'accouplement (11) étant logé de manière élastique dans le mandrin de serrage (1), une vis de réglage (13) avec ouverture de passage étant agencée en aval du manchon d'accouplement (11) en direction de l'outil (7), laquelle vis de réglage peut être déplacée par rapport au mandrin de serrage (1) dans le sens d'un axe longitudinal (2) du mandrin de serrage (1) et un élément tubulaire (12) étant guidé dans le manchon d'accouplement (11), lequel élément tubulaire peut être déplacé dans le manchon d'accouplement (11) dans le sens de l'axe longitudinal (2) du mandrin de serrage (1) et est orienté en direction de la vis de réglage (13),
**caractérisé en ce qu'**il est prévu des moyens élastiques (14) qui créent une course élastique de l'élément tubulaire (12) dans le sens de l'axe longitudinal (2) du mandrin de serrage (1) de sorte que l'élément tubulaire (12) est pressé de manière élastique contre la vis de réglage (13).

2. Mandrin de serrage d'outil selon la revendication 1,
**caractérisé en ce que** les moyens élastiques comprennent un ressort spiral (14).

3. Mandrin de serrage d'outil selon la revendication 1 ou 2,
**caractérisé en ce que** les moyens élastiques sont agencés sur la face extérieure de l'élément tubulaire (12).

4. Mandrin de serrage d'outil selon l'une des revendications précédentes,
**caractérisé en ce que** les moyens élastiques reposent contre l'élément tubulaire (12) et contre le manchon d'accouplement (11).

5. Mandrin de serrage d'outil selon l'une des revendications précédentes,
**caractérisé en ce que** l'élément tubulaire (12) est guidé de manière ajustée dans le manchon d'accouplement (11) de sorte que, sans autres éléments d'étanchéité, il est possible d'éviter en grande partie une fuite de liquide de refroidissement ou de lubrification au niveau de la transition entre élément tubulaire (12) et manchon d'accouplement (11).

6. Mandrin de serrage d'outil selon l'une des revendications précédentes,
**caractérisé en ce que** le mandrin de serrage d'outil est un mandrin à rétrécissement HSK (1).
